# EUROPEAN PATENT SPECIFICATION

(11) **EP 0 589 031 B1**
(45) Date of publication and mention of the grant of the patent: **09.02.2000**
(21) Application number: 93909257.3
(22) Date of filing: 05.04.1993
(51) Int. Cl.: C22F 1/10, C03B 37/04, C03B 37/08, C03B 37/095

(54) **DISPERSION STRENGTHENED ALLOYS**
DISPERSIONSGEHÄRTETE LEGIERUNGEN
ALLIAGES DURCIS PAR DISPERSION

(30) Priority: 17.04.1992 US 870624
(43) Date of publication of application: 30.03.1994
(73) Proprietor: OWENS CORNING, Toledo, Ohio 43659 (US)
(72) Inventor: HINZE, Jay William, Newark, OH 43055 (US)
(74) Representative: West, Alan Harry
(86) International application number: US9303181
(87) International publication number: WO9321357

(56) References cited:
- EP-A- 0 398 121
- EP-A- 0 442 545
- EP-A- 0 447 858
- US-A- 3 027 281
- US-A- 4 402 767
- US-A- 4 961 818
- US-A- 5 085 679

## Description

This invention relates to coarse-grain, oxide dispersion strengthened alloys. It also relates to a process for producing such coarse grain alloys.

In certain industrial applications there is a need for the use of alloys which possess high rupture strength and high oxidation resistance at high temperatures. Notable among such applications are those in the glass fiber industry where glass fiber filaments are produced from a molten material by passage through the foraminous, or apertured, walls of a ring-shaped member which is adapted for rotation at high speeds. This device is generally referred to as a spinner. The filaments are attenuated and emitted through the apertures of the wall of the rotating spinner due to the high centrifugal action. Such spinners are operated at elevated temperatures under high stress because of the high rotational speeds. Thus, there is a need for these spinners to be formed from an alloy which has strength at elevated temperatures.

Current commercial spinner technology uses nickel or cobalt based alloys for the spinners and the spinners are formed by a casting. These alloys work well but there is still the need in the art for alloys with even higher, high temperature strength.

The industry recognizes that coarse grains are desirable. See U.S. Patent No. 3,824,635 (1974). The industry, however, uses compression straining to achieve coarse grains. The industry also uses compression techniques such as hot pressing, hot rolling or extrusion. See U.S. Patent No. 4,402,767 (1983). Others teach recrystallization of ODS alloys to achieve coarse grains.

In this invention a method is provided to cause the recrystallization of a fine grained oxide dispersion strengthened, ODS, alloy to a coarse elongated grain structure. This coarse grain structure was developed by applying modest tensile strains at high temperatures to the alloy over a wide range of strain rates.

According to the invention there is provided a process for producing an article of manufacture including the steps of:
providing an article of oxide dispersion strengthened alloy, the alloy being in its unrecrystallized condition having ultrafine grains with lengths from 0.0005 mm to 0.001 mm,
heating the article at temperatures in the range of 814°C to 1092°C (1500°F to 2000°F) below the alloy's recrystallization temperature,
submitting the heated article to deformation tensile strains of at least 20 percent reduction in area but less than 150 percent reduction in area and strain rates in the range from 1 x 10⁻⁴/sec to 1/sec to enable the formation of coarse elongated grains, and
heating the article to a secondary recrystallization temperature to establish a coarse grain structure, the coarse grains having a length ranging from 3 mm to 20 mm.

Oxide dispersion strengthened alloys are used for glass fiberization spinners as well as for gas turbine components. Of critical importance to the performance of these alloys at high temperatures is their grain structure. A very coarse grain structure with grains aligned in the direction of the applied stress is highly desirable for high temperature strength. A fine grain structure is undesirable because the parts will fail by grain-boundary sliding. A coarse elongated grain structure resists grain boundary sliding.

A coarse grain structure is difficult to obtain in ODS alloys. Normally it is obtained by forming the object for use under a series of metalworking steps such as powder ball milling, extruding, rolling and forging. Then the object is heated above the so-called secondary recrystallization temperature with the object either held isothermally at this temperature or pulled through a temperature gradient. Following this heat treatment procedure the part may or may not have a coarse elongated grain structure.

In the present invention an additional metalworking step, high temperature tensile deformation, precedes the secondary recrystallization heat treatment in order to achieve a coarse elongated grain structure. Modest applied tensile deformation was used to develop a coarse elongated grain structure. Without this tensile deformation the alloy would have recrystallized into a fine grain structure. The application of large applied tensile deformation in the near-superplastic range causes the alloy to revert to a microcrystalline grain structure.

The drawings generally schematically illustrate various processing stages in a technique of carrying out the present invention.

In the drawings:
Figure 1 shows a bar of the oxide dispersion strengthened metal prior to the high temperature tensile deformation.
Figure 2 is a photograph showing the microstructure of the oxide dispersion strengthened metal bar following high temperature tensile deformation and a secondary recrystallization heat treatment.
Figure 3A is a graph showing the tensile strains required to cause the formation of a coarse elongated grain structure.
Figure 3B is a graph showing the tensile strains required for the alloy to revert to a microcrystalline structure.
Figure 4A is a photograph showing the microstructure of a 36 inch diameter ring of an oxide dispersion strengthened metal with a tensile deformation.
Figure 4B is a photograph showing the microstructure without a tensile deformation followed by a secondary recrystallization heat treatment.
Figure 5 is a perspective view of a spinner for producing glass fibers.

The oxide dispersion strengthened metals contemplated for use in the present invention are well known in the art. These compositions include a metal matrix which contains a dispersed oxide phase. The metal matrix may be any of a wide variety of compositions including nickel, cobalt, chromium, platinum, rhodium, and iron based materials. Preferred matrices are nickel-chromium based alloys as well as nickel-chromium-cobalt based alloys. The preferred dispersed oxide phase is yttrium oxide. Exemplary compositions and techniques for forming such oxide dispersion strengthened alloy powders are set forth in U.S. Patent Nos. 3,591,362, and 3,738,817. The foregoing patents generally exemplify a technique, called mechanically alloying, for forming oxide dispersion strengthened alloys.

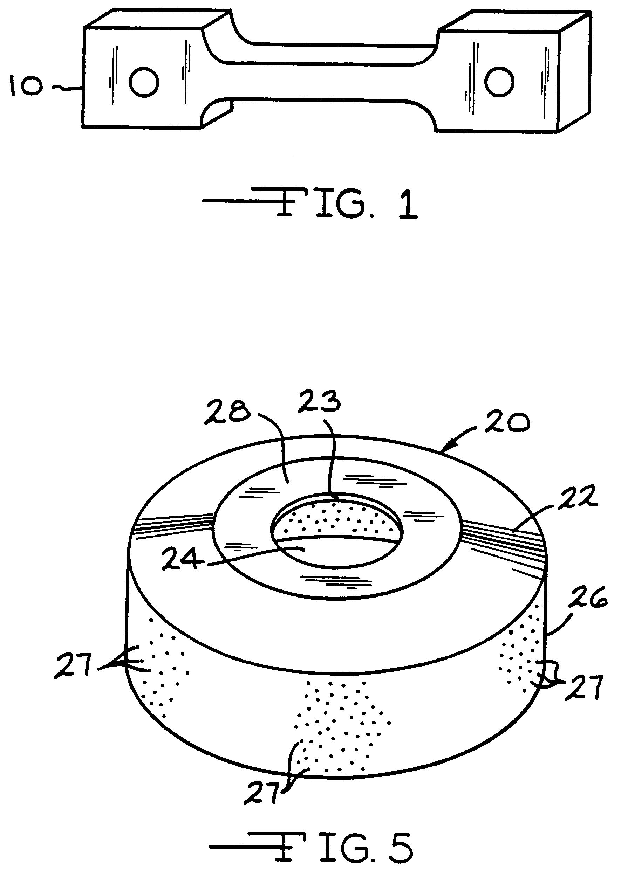

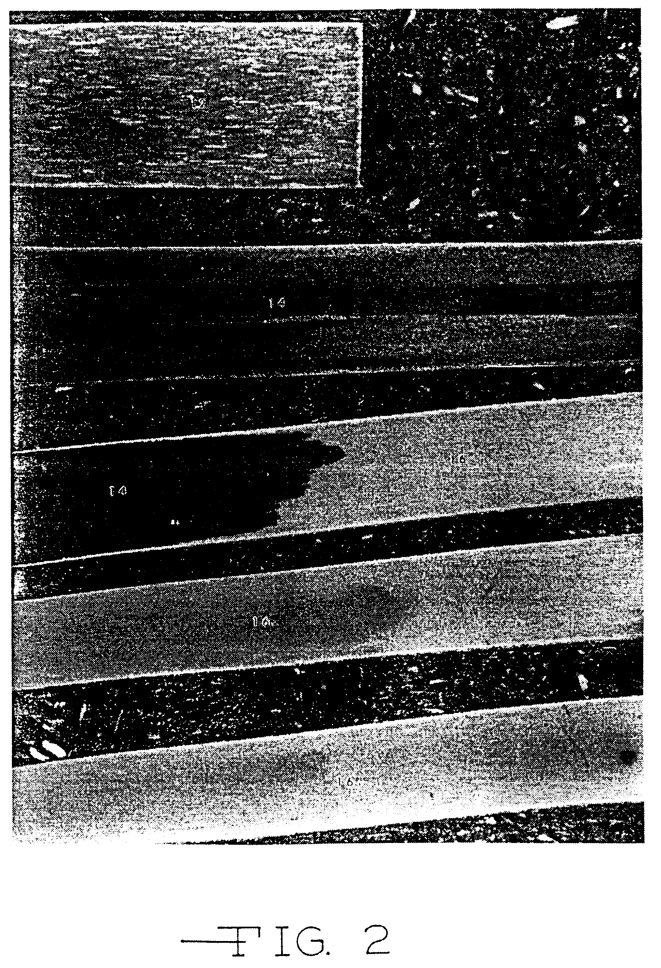

Referring now to Figure 1, bar stock 10 is shown, which is made of an oxide dispersion strengthened alloy. Figure 2 is a photograph showing the microstructure of the bar following a high temperature tensile deformation and a secondary recrystallization heat treatment. A fine grain structure 12 in the undeformed region of the bar has been converted to a coarse grain structure 14 in a transition region having modest deformation. Finally a microcrystalline grain structure 16 has been formed in the near-superplastic heavily deformed region of the bar. This structure has poor elevated temperature creep and stress rupture properties at high temperatures and must be avoided.

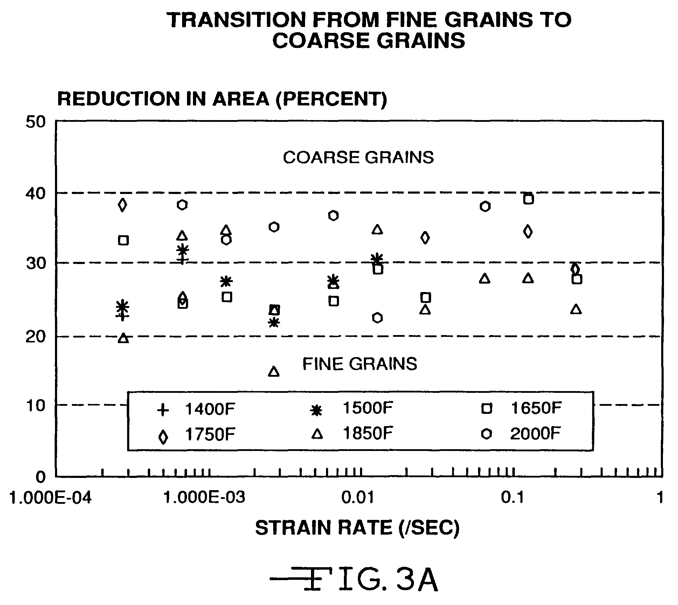

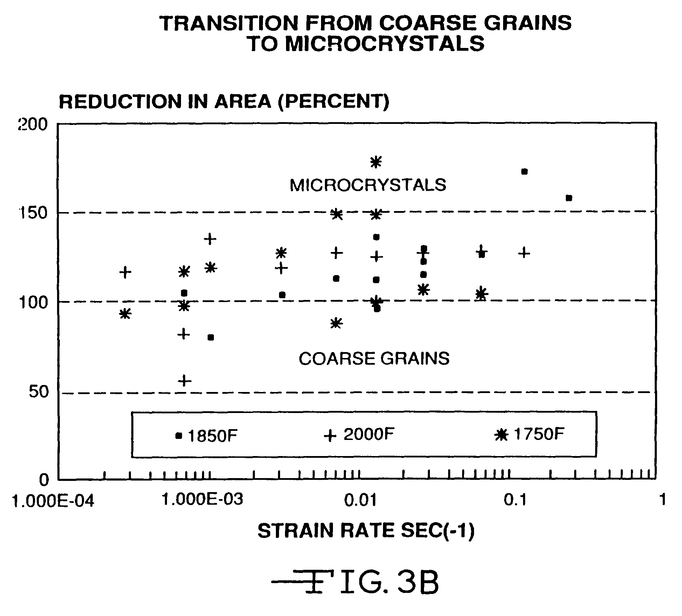

Figure 3A is a graph showing the tensile strains required to cause the formation of a coarse elongated grain structure. Figure 3B is a graph showing the tensile strain required to cause the alloy to revert to the microcrystalline grain structure. Without these tensile strains the oxide dispersion strengthened metal bar would have formed a relatively fine grained structure following the secondary recrystallization heat treatment. From the figure it is apparent that the formation of coarse grains occurs over a wide range of strain rates. In addition the formation of coarse grains occurs over a wide range of temperatures from about 814°C to 1092°C (1500°F to 2000°F). Below 814°C (1500°F) the ductility of the metal is insufficient to allow sufficient deformation to occur in order to form a coarse grain structure. Above 1092°C (2000°F) extensive porosity forms during deformation limiting the usefulness of the invention.

In the first step of an embodiment of this invention, an oxide dispersion strengthened metal bar is prepared for deformation processing. Representative suitable alloys are set forth in U.S. Patent No. 4,877,435. These alloys, in their unrecrystallized condition have ultrafine grains with length ranging from 0.0005 mm to 0.001 mm. The bar is heated in the temperature range 814°C to 1092°C (1500°F to 2000°F). Following equilibration at this temperature the bar is submitted to tensile strains and strain rates shown in Figure 3. Generally tensile strains of 20 to 50 percent reduction in area with 40 to 50 percent being preferred are required to cause the formation of coarse elongated grains having a length ranging from 3 mm to 20 mm with 10 mm being typical. Generally tensile strains of at least 80 percent with 100 to 150 percent being typical are required to cause the alloy to revert to microcrystalline grain structure with grains having a length of 0.001 mm to 0.002 mm. As noted earlier, this structure has poor creep and stress rupture properties at high temperatures and must be avoided. Without this tensile deformation the grain size of the annealed material would have ranged in size from 0.2 to 1 mm in size with 0.5 mm being typical following a secondary recrystallization heat treatment.

Following the tensile deformation and secondary recrystallization heat treatments the bar is sectioned and rectangular preforms are removed from the coarse grain structure region for such applications as gas turbine blades and vanes.

In a modification of the above deformation process a ring is fabricated of an oxide dispersion strengthened alloy by ring rolling. A suitable ring rolling technique is disclosed in U.S. Patent No. 5,085,679 issued February 4, 1992. The same procedure described above for bar material is used to form a coarse grain structure except that the tensile deformation is applied circumferentially to the ring. Such a ring is then further fabricated into a glass fiberization spinner shown in Figure 5 by a method disclosed in U.S. Patent No. 5,085,679 issued February 4, 1992 and in U. S. Serial No. 07/709,850 filed on June 4, 1991.

Referring to Figure 5 there is shown a spinner 20. Spinner 20 is comprised of a bottom flange 22 having opening 23 therein and top flange 24. Continuous periphery sidewall 26 extends between bottom flange 22 and top flange 24 to form a substantially cylindrical chamber. Sidewall 26 is adapted with apertures 27 which penetrate the sidewall and through which molten glass, introduced into the spinner through opening 28, is discharged.

### EXAMPLE

An oxide dispersion strengthened alloy extrusion having a weight ratio of nickel to chromium of approximately 70:30 and a yttria content of 0.6% yttria by weight was obtained from Inco Alloys International under the trade name MA758. This extrusion, having a diameter of approximately 13.97 cm (5.5 inches), was sliced into segments approximately 35.56 cm (14 inches long). The segments were upset forged to a height of approximately 17.78 cm (7 inches). They were then pierced to form right hollow cylinders having an internal diameter of approximately 8.89 cm (3.5 inches).

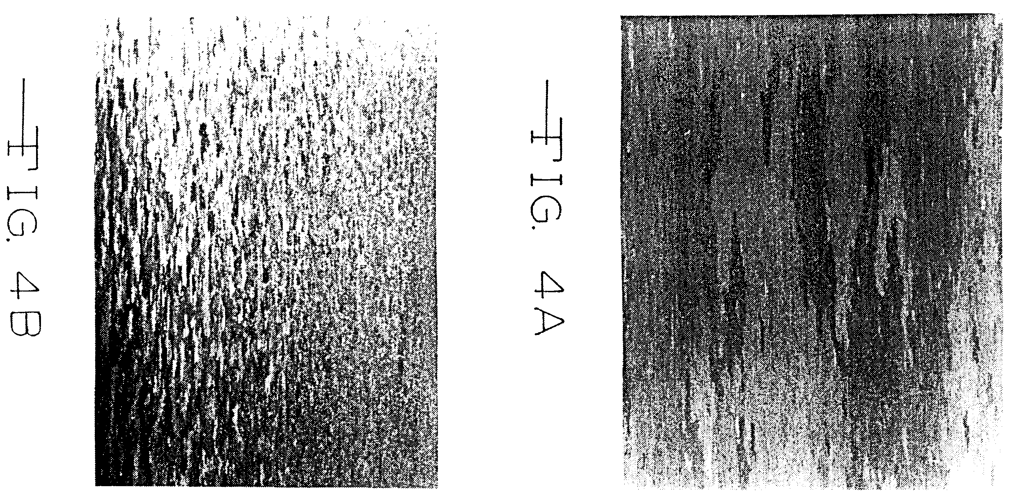

The hollow cylinders were expanded in a series of ring rolling and annealing cycles to an internal diameter of approximately 68.58 cm (27 inches). One of the rings was then submitted to the tensile deformation process described above to an internal diameter of approximately 85.09 cm (33.5), or a 25 percent reduction in area. Another ring was deformed further to an internal diameter of approximately 89.35 cm (35.25 inches), or a 31 percent reduction in area. The rings were then submitted to the secondary recrystallization heat treatment described above as shown in Figure 4A. Both rings exhibited the coarse grain structure in the circumferential and axial direction. In other words the grains resembled pancakes having a diameter approximately 3 mm to 10 mm with 10 mm being typical and thickness approximately 1 mm to 2 mm with 1 mm being typical. As shown in Figure 4B, rings produced without this tensile deformation had fine grains approximately 0.5 to 1 mm in diameter with 0.5 being more typical following the secondary recrystallization heat treatment.

Mechanical property test samples were removed from the rings produced with and without the tensile deformation. The rings that were submitted to the tensile deformation process and having the coarse grain structure had a 100 hour rupture strength of 10 ksi to 12 ksi at 1147°C (2100°F), whereas the rings that were not submitted to the tensile deformation process and having the fine grain structure had a 100 hour rupture strength of only 6 ksi to 8 ksi at 1147°C (2100°F). ( ksi = thousands of pounds per square inch, 1lb in⁻² = 6895 Pa)

## Claims

1. A process for producing an article of manufacture including the steps of:
providing an article of oxide dispersion strengthened alloy, the alloy being in its unrecrystallized condition having ultrafine grains with lengths from 0.0005 mm to 0.001 mm,
heating the article at temperatures in the range of 814°C to 1092°C (1500°F to 2000°F) below the alloy's recrystallization temperature,
submitting the heated article to deformation tensile strains of at least 20 percent reduction in area but less than 150 percent reduction in area and strain rates in the range from 1 x 10⁻⁴/sec to 1/sec to enable the formation of coarse elongated grains, and
heating the article to a secondary recrystallization temperature to establish a coarse grain structure, the coarse grains having a length ranging from 3 mm to 20 mm.

2. A process according to claim 1, wherein the tensile strain are at least 40 to 50 percent reduction in area but less than 80 percent and the strain rate ranges from 1 x 10⁻³/sec to 0.1/sec.

3. A process according to claim 1 or claim 2, where the article is a bar of oxide dispersion strengthened alloy.

4. A process according to claim 1 or claim 2, where the article is a ring of oxide dispersion strengthened alloy.

5. A process according to claim 4, where the deformation tensile strains are applied circumferentially to the ring.

## Patentansprüche

1. Verfahren zur Herstellung eines Produktionsgegenstandes, bei dem
ein Gegenstand aus einer sauerstoffdispersionsgehärteten Legierung bereitgestellt wird, wobei die Legierung in nicht rekristallisiertem Zustand mit ultrafeinen Körnern mit Längen von 0,0005 mm bis 0,001 mm vorliegt,
der Gegenstand auf eine Temperatur im Bereich von 814°C bis 1092°C (1500°F bis 2000°F) unterhalb der Rekristallisationstemperatur der Legierung erwärmt wird,
der erwärmte Gegenstand einer Verformung unter Zugbelastung bei mindestens 20%, aber weniger als 150% Querschnittsverringerung und einer Verformungsrate im Bereich von 1 x 10⁻⁴/sec bis 1/sec unterzogen wird, um die Ausbildung von länglichen Grobkörnern zu bewirken, und bei dem
der Gegenstand auf eine sekundäre Rekristallisationstemperatur erwärmt wird, um eine Grobkornstruktur herzustellen, bei der die Grobkörner eine Länge im Bereich von 3 mm bis 20 mm aufweisen.

2. Verfahren nach Anspruch 1, bei dem die Zugbelastung mindestens 40 bis 50%, aber weniger als 80% Querschnittsverringerung beträgt und die Verformungsrate zwischen 1 x 10⁻³/sec bis 0,1/sec liegt.

3. Verfahren nach Anspruch 1 oder 2, bei dem der Gegenstand ein Barren aus sauerstoffdispersionsgehärteter Legierung ist.

4. Verfahren nach Anspruch 1 oder 2, bei dem der Gegenstand ein Ring aus sauerstoffdispersionsgehärteter Legierung ist.

5. Verfahren nach Anspruch 4, bei dem die Zugbelastung in Umfangsrichtung an den Ring angelegt wird.

## Revendications

1. Procédé pour produire un objet manufacturé, comprenant les étapes consistant à :
se procurer un objet en alliage renforcé par une dispersion d'oxyde, l'alliage étant dans son état non cristallisé ayant des grains ultrafins avec des longueurs de 0,0005 mm à 0,001 mm,
chauffer l'objet à des températures situées dans la plage allant de 814°C à 1092°C (1500°F à 2000°F), inférieure à la température de recristallisation de l'alliage,
soumettre l'objet chauffé à des contraintes de traction de déformation correspondant à une réduction de surface d'au moins 20 % mais inférieure à une réduction de surface de 150 % et à des vitesses de déformation situées dans la plage allant de 1.10⁻⁴/s à 1/s pour permettre la formation de gros grains allongés, et
chauffer l'objet à une température de recristallisation secondaire pour établir une structure à gros grains, les gros grains ayant une longueur située dans la plage allant de 3 mm à 20 mm.

2. Procédé selon la revendication 1, dans lequel les contraintes de traction correspondent à une réduction de surface d'au moins 40 à 50 % mais inférieure à 80 % et la vitesse de déformation est située dans la plage allant de 1.10⁻³/s à 0,1/s.

3. Procédé selon la revendication 1 ou la revendication 2, dans lequel l'objet est une barre en alliage renforcé par une dispersion d'oxyde.

4. Procédé selon la revendication 1 ou la revendication 2, dans lequel l'objet est un anneau en alliage renforcé par une dispersion d'oxyde.

5. Procédé selon la revendication 4, dans lequel les contraintes de traction de déformation sont appliquées sur la circonférence de l'anneau.
